# EUROPÄISCHE PATENTSCHRIFT

(11) **EP 2 721 211 B1**
(45) Veröffentlichungstag und Bekanntmachung des Hinweises auf die Patenterteilung: **13.05.2015**
(21) Anmeldenummer: 12713093.8
(22) Anmeldetag: 29.03.2012
(51) Int. Cl.: D21F 5/02, D21F 5/04, D21F 5/18, D21F 5/20

(54) **VERFAHREN ZUR WÄRMERÜCKGEWINNUNG FÜR EINE TROCKENPARTIE EINER MASCHINE ZUR HERSTELLUNG EINER MATERIALBAHN UND MASCHINE ZUR HERSTELLUNG EINER MATERIALBAHN**
METHOD FOR RECOVERING HEAT FOR A DRYING SECTION OF A MACHINE FOR PRODUCING A MATERIAL WEB AND MACHINE FOR PRODUCING A MATERIAL WEB
PROCÉDÉ DE RÉCUPÉRATION DE CHALEUR POUR UNE PARTIE SÈCHE D'UNE MACHINE DE FABRICATION D'UNE BANDE DE MATÉRIAU ET MACHINE DE FABRICATION D'UNE BANDE DE MATÉRIAU

(30) Priorität: 20.06.2011 DE 102011077845; 07.11.2011 DE 102011085821
(43) Veröffentlichungstag der Anmeldung: 23.04.2014
(73) Patentinhaber: Voith Patent GmbH, 89522 Heidenheim (DE)
(72) Erfinder: BRUNS, Guido, 65185 Wiesbaden (DE); MULZER, Roland, 95497 Goldkronach (DE); POPP, Marco, 96260 Weismain (DE)
(86) Internationale Anmeldenummer: PCT/EP2012/055629
(87) Internationale Veröffentlichungsnummer: WO 2012/175230

(56) Entgegenhaltungen:
- AT-B1- 506 077
- DE-A1-102009 000 753
- GB-A- 2 155 164

## Beschreibung

Die Erfindung betrifft ein Verfahren zur Wärmerückgewinnung für eine Trockenpartie einer Maschine zur Herstellung einer Materialbahn, insbesondere Faserstoffbahn in Form einer Papier-, Karton-, oder Tissuebahn, gemäß dem Oberbegriff des Anspruchs 1.

Die Erfindung betrifft ferner eine Maschine zur Herstellung einer Materialbahn, insbesondere einer Papier-, Karton- oder Tissuebahn, gemäß dem Oberbegriff des Anspruchs 13 bzw. 14.

Trockenpartien, umfassend zumindest einen mit Dampf beheizbaren Trockenzylinder und zumindest ein Hochtemperatur-Trockenelement, welches derart ausgeführt und angeordnet ist, die Faserstoffbahn zumindest mittelbar mit Heißluft zu beaufschlagen, sind aus dem Stand der Technik in unterschiedlichen Ausführungen vorbekannt. Dabei wird das mit Dampf beheizbare im Trockenzylinder anfallende Dampf- /Kondensatgemisch zumindest einem Kondensatabscheider zugeführt, wobei der Dampf aus dem Kondensatabscheider dem Frischdampf oder einem Frischdampf-/ oder Hochdruckdampfgemisch zugeführt wird und zumindest ein Teil des Kondensats aus dem zumindest einem Trockenzylinder nachgeschalteten Kondensatabscheider einem Wärmetauscher im Abluftstrom des Hochtemperatur-Trockenelementes zugeführt wird. Das Kondensat wird dabei in diesem erhitzt und nimmt die Energie der Abluft auf. Ein derartiges Verfahren beziehungsweise eine derartige Vorrichtung ist beispielsweise aus der Druckschrift AT 506 077 B1 bekannt. In dieser wird ein Verfahren und eine Vorrichtung zur Wärmerückgewinnung in einer Trockenpartie einer Papiermaschine offenbart, wobei die Papierbahn mit einem dampfbeheizten Trockenzylinder und einer mit Heißluft beaufschlagten Hochtemperaturhaube getrocknet wird. Der Abdampf aus dem Dampfsystem wird einem Dampfabscheider zugeführt. Ein Teil des Kondensats aus dem Dampfabscheider wird in einem separaten Kreislauf über einen Wärmetauscher wieder an den gleichen und einzigen Dampfabscheider zurückgeführt und dem Kondensat über den Wärmetauscher Wärme aus der Abluft des Hochtemperatur-Trockenelementes zugeführt. Dieser Ausführung lag die Aufgabe zugrunde, ein gegenüber dem vorherigen Stand der Technik verbessertes und leichter regelbares Wärmerückgewinnungsverfahren zur Verfügung zu stellen. Die Verbesserung wurde dabei darin gesehen, dass die Erwärmung des Kondensats im genannten Wärmetauscher nicht vollständig zur Verdampfung führt, da der Dampf oder auch das Dampf- /Kondensatgemisch zum genannten Kondensatabscheider zurückgeführt wird. Eine aufwendige Regelung des Kondensatflusses durch den Wärmetauscher, um die Verdampfungskapazität des Wärmetauschers zu berücksichtigen, die wiederum von einer gegebenenfalls schwankenden Ablufttemperatur abhängt, kann bei dieser Ausführung entfallen.

Im Dokument DE 102009000753 A1 ist ein Verfahren und eine Vorrichtung zur Trocknung einer Faserstoffbahn offenbart, bei dem die laufende Faserstoffbahn im Bereich einer vorangehenden Trocknungszone mit Dampf sowie heißer, feuchter Luft beaufschlagt und im Anschluss an die vorangehende Trocknungszone einer nachgeordneten Trocknungszone zugeführt wird, die einen Trockenzylinder, insbesondere Yankee-Zylinder, sowie eine diesem zugeordnete Haube umfasst. Dabei wird der dem Trockenzylinder der nachgeordneten Trocknungszone zugeordneten Haube Heißluft, insbesondere Abluft, entnommen. Zur Erzeugung wenigstens eines Teils des Dampfes für die vorangehende Trocknungszone wird mittels eines ersten Wärmetauschers im Trockenzylinder der nachgeordneten Trocknungszone anfallendes Kondensat und/oder Frischwasser durch die der Haube entnommene Heißluft erhitzt. Alternativ oder zusätzlich wird zur Erzeugung wenigstens eines Teils der heißen, feuchten Luft für die vorangehende Trocknungszone die der Haube entnommene, durch den ersten Wärmetauscher hindurch geführte Heißluft der vorangehenden Trocknungszone zugeführt.

Unter einem Kondensatabscheider wird eine Einrichtung verstanden, die geeignet ist, Dampf von Kondensat zu trennen. Für diese werden auch andere Namen verwendet, wie Dampfabscheider oder Separator.

Der Erfindung liegt die Aufgabe zugrunde, ein Verfahren und eine Vorrichtung der zur Wärmerückgewinnung gegenüber dem Stand der Technik zu verbessern, sodass die angebotene Energie des Abluftstroms des wenigstens einen Hochtemperatur-Trockenelementes thermodynamisch auf höchstmöglichem Niveau genutzt wird, insbesondere in Abhängigkeit der Faserstoffbahnsorte immer eine höchstmögliche Wärmerückgewinnungsausbeute ermöglicht.

Die erfindungsgemäße Lösung der Aufgabe erfolgt durch die Merkmale der Ansprüche 1 und 13, 14 Vorteilhafte Ausgestaltungen sind in den Unteransprüchen beschrieben.

Der Anspruch 1 betrifft ein Verfahren zur Wärmerückgewinnung für eine Trockenpartie einer Maschine zur Herstellung einer Materialbahn, insbesondere Faserstoffbahn in Form einer Papier-, Karton-, oder Tissuebahn, wobei die Materialbahn zumindest mit einem dampfbeheizten Trockenzylinder und zumindest einem Hochtemperatur-Trockenelement mit Heißluft unter Anfall eines Abluftstromes getrocknet wird, wobei der zumindest eine Trockenzylinder zumindest teilweise mit Frischdampf beaufschlagt wird, wobei das Kondensat-/ Dampfgemisch des zumindest einen Trockenzylinders einer Kondensatabscheidestufe zugeführt wird, wobei der Dampf aus der Kondensatabscheidestufe dem Frischdampf oder einem Frischdampf/- Hochdruckdampfgemisch zugeführt wird, wobei zumindest ein Teil des Kondensats aus der dem zumindest einen Trockenzylinder nachgeschalteten Kondensatabscheidestufe einem Wärmetauscher im Abluftstrom des Hochtemperatur-Trockenelementes zugeführt wird, und wobei das Kondensat dort erhitzt wird und Energie der Abluft aufnimmt. Erfindungsgemäß wird der zumindest eine Teil des Kondensats aus der dem zumindest einen Trockenzylinder nachgeschalteten Kondensatabscheidestufe im Wärmetauscher entweder zumindest teilweise unter Entstehung eines Gemisches aus Dampf und Kondensat, vorzugsweise vollständig verdampft oder im Wärmetauscher erhitzt und nach dem Ausgang aus dem Wärmetauscher unter zumindest teilweiser Verdampfung entspannt und der so entstandene Dampf wird in eine Dampfleitung oder einen Dampfbehälter eingespeist, wobei die Dampfleitung und oder der Dampfbehälter wenigstens mittelbar mit zumindest zwei Dampfverbrauchern verbindbar ist bzw. sind. Dabei wird bzw. werden die Dampfleitung und/oder Dampfbehälter wahlweise mit zumindest einem der Dampfverbraucher verbunden. Unter einem Dampfverbraucher wird eine Einrichtung verstanden, welche für ihre Funktion Dampf benötigt. Dabei kann zwischen Dampfverbrauchern mit Kondensatrückführung und Dampfverbrauchern frei von einer Kondensatrückführung unterschieden werden. Im erstgenannten Fall wird das beim Betrieb anfallende Kondensat aufgefangen und dem Dampfverbraucher oder einem anderen wieder zugeführt. Im letztgenannten Fall wird der Dampf lediglich ausgegeben, wobei das bei der jeweiligen Anwendung anfallende Kondensat an die Umgebung abgegeben und nicht aufgefangen wird. Derartige Dampfverbraucher sind beispielsweise Dampfbefeuchter, welche Dampf auf die Faserstoffbahn im Endbereich der Trockenpartie aufbringen oder Dampfblaskästen.

Verbindbar bedeutet, dass eine Verbindung herstellbar ist. Wenigstens mittelbar verbindbar im Sinne der Erfindung umfasst alle Möglichkeiten einer direkten Verbindung oder einer Verbindung über weitere Übertragungsmittel. Die Verbindung kann beispielsweise über Strömungsverbindungen, insbesondere Leitungen, Hohlräume oder Kanäle e.t.c realisiert werden, die vom Dampfverbraucher und/oder der Dampfleitung entkoppelbar sein können. Die wahlweise Entkopplung/Kopplung kann durch entsprechende Einrichtungen, beispielsweise Ventileinrichtungen in Form von Schaltventilen oder Sperrventilen realisiert werden.

Unter Frischdampf wird in dieser Anmeldung Dampf verstanden, dessen Herstellung nicht aus dieser Beschreibung oder aus der Figur hervorgeht. Die Herstellung von Frischdampf könnte in einem Kesselhaus oder in einem sonstigen Dampferzeuger stattfinden. Ein sonstiger Dampferzeuger könnte auch ein Dampferzeuger sein, der die Brennerkapazität einer Heißlufthaube nutzt.
Der Begriff Hochdruckdampf bezieht sich auf Dampf mit einem Druck im Bereich von 10 bis 20bar.

Der Vorteil der erfindungsgemäßen Lösung besteht in der Möglichkeit der Dampfbereitstellung unter optimaler Ausnutzung der ohnehin innerhalb der

Trockenpartie anfallenden Abwärme, insbesondere zumindest eines Abluftstromes eines Hochtemperatur-Trockenelementes für einen oder eine Vielzahl von Dampfverbrauchern. Insbesondere besteht die Möglichkeit in Abhängigkeit der Randbedingungen des Einsatzfalles Dampf mit der bestmöglichsten Wärmerückgewinnungsausbeute aus dem Gesamtssystem gezielt für einen bestimmten Dampfverbraucher bereitzustellen.

In besonders vorteilhafter Ausbildung wird der mit der Dampfleitung und/oder dem Dampfbehälter zu verbindende Dampfverbraucher in Abhängigkeit einer die Menge der Abluft und/oder Temperatur der Abluft wenigstens mittelbar charakterisierenden Größe gewählt. In einer besonders vorteilhaften Weiterbildung werden die Parameter des entstehenden Dampfes in Abhängigkeit einer die Menge der Abluft und/oder Temperatur der Abluft wenigstens mittelbar charakterisierenden Größe gesteuert. Dadurch kann bei Trocknung einer definierten Papiersorte in der Trockenpartie, welche im Betrieb dieser durch eine definierte Abluftmenge und/oder Temperatur der Abluft charakterisiert ist, die höchstmögliche Wärmeausbeute erzielt werden. Ferner kann auf Änderungen der Randbedingungen durch die optimale Wahl des Dampfverbrauchers reagiert werden. So kann im Einzelnen bei sehr hohen Ablufttemperaturen gewährleistet werden, dass die erzeugte Dampfmenge abgenommen wird, indem die Möglichkeit der Erzeugung von Hochdruckdampf zur Verfügung steht, während bei niedrigen Temperaturen der Abluft und/oder geringen Abluftmengen die Erzeugung von Hochdruckdampf unwirtschaftlich wäre und somit nur Dampf mit niedrigeren Drücken erzeugt wird und den entsprechenden, Dampf mit diesen Parametern benötigenden Dampfverbrauchern zugeführt wird.

Gemäß einem ersten Lösungsansatz erfolgt dazu die Führung zumindest eines Teils an Kondensat aus dem, dem zumindest einen Trockenzylinder nachgeschalteten Kondensatabscheider über zumindest einen Wärmetauscher im Abluftstrom unter zumindest teilweiser Verdampfung, vorzugsweise vollständiger Verdampfung. Durch die direkte Verdampfung ist eine wesentlich geringere Menge an Ausgangsfluid in Form von Kondensat aus dem, dem zumindest einen Trockenzylinder nachgeschalteten Kondensatabscheider zur Erzeugung der gleichen Dampfmenge erforderlich als bei den bekannten Lösungen. Aufgrund der bereits im Wärmetauscher erfolgenden Verdampfung und der geringeren erforderlichen Menge an Kondensat wird ein wesentlich geringerer Druck am Eintritt für das Kondensat in diesen benötigt, wodurch der erforderliche Energiebedarf für die im Zulauf für das Kondensat zum Wärmetauscher angeordneten Pumpen erheblich reduziert werden kann. Geringe erforderliche Drücke erhöhen die Betriebssicherheit. Ferner können Investitionskosten eingespart werden, da die Auslegung der einzelnen Komponenten nur auf die geringeren einzustellenden Drücke erfolgen muss.

Ein weiterer Vorteil besteht darin, dass aufwendige Schalt- und Ventilanordnungen zur zusätzlichen Steuerung des Dampfdruckniveaus vermieden werden. Die Lösung ist damit durch einen besonders einfachen Aufbau charakterisiert. Die Anzahl der Komponenten zur Steuerung und/oder Regelung beschränkt sich auf ein Minimum.

Der Wärmetauscher gemäß dem ersten Lösungsansatz ist derart ausgebildet, geeignet zu sein, aus dem in diesem geführten Ausgangsfluid, insbesondere Kondensat Dampf durch Erzielung des erforderlichen Phasenüberganges zu erzeugen. Der Wärmetauscher kann verschiedenartig ausgeführt sein und der Aufbau und Auslegung dessen kann zur Realisierung der unterschiedlichsten Möglichkeiten der Dampferzeugung erfolgen. Gemäß einer besonders vorteilhaften Ausbildung umfasst dieser einen Dampferzeuger wie einen Dampfkessel, insbesondere Abhitzekessel. In Abhängigkeit der Erfordernisse der dem Wärmetauscher zumindest mittelbar, d.h. direkt oder über weitere Übertragungselemente nachgeordneten Dampfverbraucher wird Dampf in Form von Sattdampf oder überhitzen Dampf bereitgestellt.

Gemäß einem zweiten Lösungsansatz wird die Abluft des Hochtemperatur-Trockenelementes nur zur Erwärmung des zumindest einen Teils an Kondensat aus dem, dem zumindest einen Trockenzylinder nachgeschalteten Kondensatabscheider genutzt, welches hinter dem Ausgang aus dem Wärmetauscher entspannt wird. Erfolgt keine Verdampfung im Wärmetauscher, können konventionelle Wärmetauscher zum Einsatz gelangen.

Der thermodynamische Vorteil dieses Lösungsansatzes liegt darin, dass das Kondensat auf eine sehr hohe Temperatur im Wärmetauscher erhitzt werden kann und sich damit nach Wiederentspannung ein sehr hoher Dampfdruck ergeben kann. Weil der entstehende Dampf in eine Dampfleitung oder einen Dampfbehälter eingespeist wird, dessen Druck höher ist als der Druck des dem zumindest einen Trockenzylinder nachgeschalteten Kondensatabscheiders, besteht keine systembegrenzte Limitation des Druckes des entstehenden Dampfes nach oben, wie es zum Beispiel der Fall ist, wenn man den Dampf in einen Kondensatabscheider einspeisen würde, der einem Trockenzylinder unmittelbar nachgeschaltet ist und deshalb dort der kondensatseitige Druck des Trockenzylinders herrschen muss.

Ein weiterer Vorteil ist, dass das gesamte Wärmerückgewinnungssystem ohne Verdichter, die sich in einer dampfhaltigen Leitung befinden, auskommt.

Vorzugsweise wird der am Ausgang aus dem Wärmetauscher vorliegende und aus dem Kondensat gemäß dem ersten Lösungsansatz oder der durch Entspannung erhitzten Kondensats erzeugte Dampf wenigstens einem Dampfverbraucher zumindest mittelbar, d.h. direkt oder über weitere Übertragungswege und/oder das aus dem Wärmetauscher austretende Fluid beeinflussende Funktionselemente und Einheiten. zugeführt.

Die direkte Zufuhr ist nur bei vollständiger Verdampfung unter Einstellung der erforderlichen, den einem Dampfverbraucher zuzuführenden Dampf charakterisierenden Parametern möglich. Wird ein Gemisch aus Dampf und Kondensat erzeugt, wird der am Ausgang aus dem Wärmetauscher vorliegende und aus dem Kondensat erzeugte Dampf oder das Gemisch aus Dampf und Kondensat zumindest über eine Kondensatabscheidestufe geführt. Dadurch wird sichergestellt, dass noch im aus dem Wärmetauscher austretenden Dampf enthaltenes Kondensat sicher abgeschieden wird. Dies gilt in Analogie auch für das nach Austritt aus dem Wärmetauscher entspannte Kondensat.

In der Verbindung des Ausganges aus dem Wärmetauscher oder dem nachgeordneten Kondensatabscheider zum Dampferzeuger können Mittel zur Beeinflussung des Dampfes, insbesondere Druck beeinflussende Mittel vorgesehen werden. Diese umfassen im einfachsten Fall zumindest eine Ventileinrichtung. Über diese kann das Druckniveau in der jeweiligen Dampf oder ein Gemisch aus Dampf und Kondensat führenden Leitung an die konkreten Erfordernisse des Einsatzfalles schnell und einfach angepasst werden.

In einer vorteilhaften Ausführung der Erfindung ist eine Mehrzahl von Dampfverbrauchern vorgesehen, d.h. wenigstens zwei oder mehr, die jeweils wahlweise mit der Dampfleitung oder dem Dampfbehälter verbindbar sind, d.h. wahlweise mit diesen gekoppelt oder von diesen entkoppelt werden können beziehungsweise zu- oder abschaltbar sind. Gemäß einer besonders vorteilhaften Weiterbildung sind die einzelnen Dampfverbraucher jeweils einzeln oder in Gruppen mit der Dampfleitung oder dem Dampfbehälter verbindbar, wobei der Druck des Dampfes in der jeweiligen Verbindung zwischen Dampfverbraucher und Dampfleitung oder dem Dampfbehälter gesteuert, vorzugsweise geregelt wird. Dadurch wird eine Versorgung unterschiedlicher Funktionseinheiten mit Dampf mit unterschiedlichem Druckniveau in Abhängigkeit sich ändernder Anforderungen über nur ein System möglich, wobei aufgrund der Steuer- und gegebenenfalls Regelbarkeit die jeweiligen einzelnen Dampfverbraucher mit dem Dampf mit den erforderlichen Dampfparametern entweder alternativ oder einander nebengeordnet hinsichtlich der geforderten Druckniveaus zeitnah versorgt werden können.

Vorteilhaft ist es, wenn der zumindest eine Teil des im Wärmetauscher entweder zumindest teilweise verdampften oder in diesem erhitzten und nach Führung an oder in diesem entspannten Kondensats zumindest einer weiteren Kondensatabscheidestufe zugeführt wird, da dadurch gewährleistet ist, dass im Dampf eventuell enthaltenes Kondensat sicher abgeschieden werden kann.

In vorteilhafter Weise werden die einzelnen Kondensatabscheidestufen zur Realisierung von Dampfströmen mit unterschiedlichem Druckniveau nacheinander durchlaufen. Denkbar ist es jedoch auch, diese parallel anzuordnen und zu durchlaufen, wobei dann der am Wärmetauscher ausgegebene Dampf oder das Gemisch aus Dampf und Kondensat in entsprechender Weise auf die einzelnen parallelen Zweige aufgeteilt werden muss.

Zur Realisierung möglichst geschlossener, effektiv und energieoptimiert arbeitender Systeme wird zumindest ein Teil, vorzugsweise der größte Teil des Kondensats zumindest einer der weiteren Kondensatabscheidestufen dem Wärmetauscher wieder zugeführt und damit erneut der Dampferzeugung zugrunde gelegt. Dies erspart das aufwendige Auffangen und Ableiten.

Gemäß einer Weiterentwicklung einer Ausführung mit zumindest einer oder mehreren Kondensatabscheidestufen wird das zumindest in der letzten Kondensatabscheidestufe anfallende und keiner weiteren Kondensatabscheidestufe mehr zugeführte Kondensat jeweils dem Eingang für Kondensat am Wärmetauscher zugeführt. Dort kann dieses auf einfache Art und Weise erneut erhitzt und verdampft werden.

In einer vorteilhaften Ausführung kann der erzeugte Dampf als Hochdruckdampf in eine entsprechend dafür ausgelegte Dampfleitung eingespeist werden. Unter Hochdruckdampf wird Dampf verstanden, der durch einen hohen Druck im Bereich zwischen einschließlich 10 und 20 bar charakterisiert ist. Vorzugsweise wird Hochdruckdampf mit zumindest einem der nachfolgenden Parameter
- Druck im Bereich von 10 bar bis 20 bar, insbesondere 12 bar bis 20 bar
- Temperatur im Bereich von 160°C bis 220°C, vorzugsweise 179°C/180°C bis 212 °C/213°C
in die Dampfleitung oder einen Dampfbehälter eingespeist.

Die Einspeisung des Dampfes sowie gegebenenfalls des Hochdruckdampfes kann in eine Dampfleitung in Form einer zentralen Verteilerleitung beziehungsweise einen Dampfbehälter in Form eines Verteilers erfolgen, die beziehungsweise der mit einem oder mehreren Dampfverbrauchern verbindbar ist.

In einer besonders bevorzugten Ausführung wird zumindest ein Teil des aus dem Kondensat erzeugten Dampfes oder des Dampfanteiles eines Gemisches aus Dampf und Kondensat zumindest mittelbar dem mit Dampf beheizbaren Trockenzylinder als Dampfverbraucher wieder zugeführt. Dadurch können einem oder mehreren Trockenzylindern geschlossene oder offene Dampf-/Kondensatsysteme zugeordnet werden, die unter Ausnutzung ohnehin anfallender Wärmeströme besonders energieeffizient betrieben werden können.

Alternativ oder zusätzlich kann zumindest ein Teil des Dampfes, vorzugsweise Hochdruckdampfes in eine nur oder anteilsmäßig Frischdampf führende Leitung des Trockenzylinders eingespeist werden. Dabei kann die Einspeisung direkt in die Frischdampf oder nur anteilsmäßig Frischdampf führende Leitung oder über die Dampfleitung als zentrale Verteilerleitung erfolgen.

In besonders vorteilhafter Weise ist der Druck im Strom des Kondensats im Zulauf beziehungsweise am Eingang zum Wärmetauscher und/oder im Dampfstrom oder dem Strom eines Gemisches aus Dampf und Kondensat nach dem Ausgang aus dem Wärmetauscher beziehungsweise im Ablauf und/oder zwischen den einzelnen Kondensatabscheidestufen und/oder diesen nachgeordnet steuer- und/oder regelbar. Durch die Vielfältigkeit der Möglichkeiten der Beeinflussung der einzelnen Massenströme im Verdampfungssystem kann dieses trotz einfacher Ausführung mit geringem Aufwand einer Vielzahl von unterschiedlichen Anforderungen gerecht werden.

Vorrichtungsmäßig umfasst das System zur Wärmerückgewinnung für eine Trockenpartie einer Maschine zur Herstellung einer Materialbahn, insbesondere einer Faserstoffbahn in Form einer Papier-, Karton- oder Tissuebahn, zumindest einen beheizbaren Zylinder mit einem diesem zugeordneten Dampf-/Kondensatsystem und wenigstens ein Hochtemperatur-Trockenelement zur zumindest mittelbaren Beaufschlagung der Materialbahn mit Heißluft mit einem diesem zugeordneten Abluftsystem, einen im Abluftsystem angeordneten Wärmetauscher, zumindest eine im Dampf-/Kondensatsystem dem Trockenzylinder nachgeordnete und zumindest einen Kondensatabscheider umfassende Kondensatabscheidestufe, deren Ausgang für Kondensat mit dem Abluftstrom über den Wärmetauscher wenigstens mittelbar wärmetechnisch gekoppelt ist. Unter wärmetechnischer Kopplung werden alle Möglichkeiten verstanden, die eine Wechselwirkung im Sinne eines Wärmeüberganges zwischen zwei oder mehreren Strömen ermöglichen.

Gemäß einem ersten Lösungsansatz ist erfindungsgemäß der Wärmetauscher derart ausgeführt und angeordnet, geeignet zu sein, das über diesen geführte Kondensat aus der zumindest einen, dem Trockenzylinder im Dampf-/Kondensatsystem nachgeordneten Kondensatabscheidestufe zumindest teilweise zu verdampfen, wobei der Ausgang für Dampf oder ein Gemisch aus Dampf und Kondensat am Wärmetauscher wenigstens mittelbar mit einer Dampfleitung und/oder einem Dampfbehälter gekoppelt ist, wobei die Dampfleitung und/oder der Dampfbehälter mit wenigstens zwei Dampfverbrauchern wenigstens mittelbar verbindbar ist bzw. sind. Gemäß einer besonders vorteilhaften Ausführung ist dazu der Wärmetauscher als Abhitze- beziehungsweise Abgaskessel ausgeführt, umfassend Mittel zur Dampferzeugung aus Kondensat unter Ausnutzung von Abluft als Wärmeträger. Bezüglich der Vorteile wird auf die Ausführungen zum Verfahrensanspruch gemäß dem ersten Lösungsansatz verwiesen.

Bei einem erfindungsgemäß ausgeführten System gemäß einem zweiten Lösungsansatz ist der Wärmetauscher derart ausgeführt und angeordnet, geeignet zu sein, das über diesen geführte Kondensat aus der zumindest einen, dem Trockenzylinder im Dampf-/Kondensatsystem nachgeordneten Kondensatabscheidestufe auf Temperaturen im Bereich von 150°C bis 240°C, insbesondere 160°C bis 220°C, vorzugsweise 179°C bis 212 °C zu erhitzen, wobei der Ausgang für erhitztes Kondensat aus dem Wärmetauscher wenigstens mittelbar mit einer Dampfleitung und/oder einem Dampfbehälter unter Zwischenschaltung von Mitteln zur Entspannung des erhitzten Kondensats unter zumindest teilweiser Verdampfung gekoppelt ist, wobei die Dampfleitung und/oder der Dampfbehälter mit wenigstens zwei Dampfverbrauchern wenigstens mittelbar verbindbar ist bzw. sind.

Koppelbar bedeutet, dass eine Verbindung herstellbar ist. Die Kopplung kann konstruktiv und/oder funktional erfolgen.

Bei beiden Lösungsansätzen ist die Dampfleitung vorzugsweise derart ausgeführt, geeignet zu sein, auch Hochdruckdampf zu führen beziehungsweise aufzunehmen.

Bezüglich der Vorteile dieser Ausführung wird auf die vorgenannten Vorteile für den zweiten Lösungsansatz verwiesen.

In einer vorteilhaften Ausführung sind dem Ausgang für Dampf oder ein Gemisch aus Dampf und Kondensat oder erhitztes Kondensat am Wärmetauscher zumindest eine, vorzugsweise eine Mehrzahl von parallel oder in Reihe zueinander geschalteten Kondensatabscheidestufen, umfassend zumindest jeweils einen Kondensatabscheider nachgeordnet, deren Dampfausgang wenigstens mittelbar mittelbar mit der Dampfleitung und damit wenigstens mittelbar mit jeweils zumindest einem Dampfverbraucher gekoppelt ist. Die Kopplung kann bei vollständiger Verdampfung direkt, bei nur teilweiser Verdampfung über zumindest eine, vorzugsweise eine Mehrzahl von parallel oder in Reihe zueinander geschalteten Kondensatabscheidestufen, umfassend zumindest jeweils einen Kondensatabscheider, erfolgen. Über diese kann aus noch nicht vollständig verdampftem Kondensat Dampf und Kondensat abgeschieden werden, wobei das Kondensat erneut dem Wärmetauscher zuführbar ist. Dazu ist vorrichtungsmäßig der Ausgang für Kondensat zumindest einer Kondensatabscheidestufe mit dem Eingang am Wärmetauscher gekoppelt. Auf zusätzliche Einrichtungen zur Kondensataufbereitung kann verzichtet werden. Des Weiteren können Dampfströme mit unterschiedlichem Druckniveau bereitgestellt werden.

In einer besonders vorteilhaften Weiterentwicklung ist eine Mehrzahl von Dampfverbrauchern vorgesehen, die mit der Dampfleitung oder dem Dampfbehälter verbunden sind, wodurch mit nur einem System eine Mehrzahl von Dampfverbrauchern gleichzeitig oder alternativ mit Dampf entsprechend der jeweiligen Anforderungen versorgt werden kann.

In einer besonders vorteilhaften Weiterbildung ist eine Mehrzahl von Dampfverbrauchern vorgesehen, die jeweils einzeln und/oder in Gruppen mit der Dampfleitung oder dem Dampfbehälter verbunden oder verbindbar sind. Es sind des Weiteren Mittel zur wahlweisen Kopplung/Entkopplung und/oder Steuerung der Dampfströme und/oder der den Dampf charakterisierenden Parameter in der jeweiligen Verbindung beziehungsweise Verbindungsleitung zwischen Dampfverbraucher und Dampfleitung oder dem Dampfbehälter vorgesehen. Diese Ausführung erlaubt die einfache Anbindung oder Herausnahme des einzelnen Dampfverbrauchers an oder aus dem System sowie ferner die optimale Anpassung der jeweiligen Dampfströme zu den einzelnen Dampfverbrauchern.

Das einem Trockenzylinder zugeordnete Dampf-/Kondensatsystem umfasst zumindest eine mit dem Trockenzylinder koppelbare Dampfzufuhr, insbesondere Zufuhrleitung für Dampf und eine Abfuhr für Kondensat, wobei die Abfuhr über zumindest einen diesem nachgeschalteten Kondensatabscheider und den Wärmetauscher wenigstens mittelbar wieder mit der Zufuhrleitung für Dampf zum Trockenzylinder verbindbar ist. Dadurch wird auf einfache Art und Weise ein geschlossenes System mit optimaler Energiebilanz bereitgestellt. In besonders vorteilhafter Weise ist dazu der Ausgang für Dampf oder ein Gemisch aus Dampf und Kondensat oder Kondensat am Wärmetauscher zumindest mittelbar mit der Zufuhrleitung für Dampf am Trockenzylinder gekoppelt. Die Kopplung kann bei vollständiger Verdampfung direkt, bei nur teilweiser Verdampfung über zumindest eine, vorzugsweise eine Mehrzahl von parallel oder in Reihe zueinander geschalteten Kondensatabscheidestufen, umfassend zumindest jeweils einen Kondensatabscheider, erfolgen. Im einfachsten Fall wird die Kopplung mit der Dampfzufuhr durch die zumindest mittelbare Verbindung der Dampfleitung mit der Dampfzufuhr des Trockenzylinders realisiert.

Die Dampfzufuhr des Trockenzylinders ist in einer vorteilhaften Ausführung mit einer Frischdampf führenden Leitung verbunden. Die Einspeisung des Dampfes aus der Dampfleitung kann durch die Verbindung dieser mit der Frischdampfleitung erfolgen. In einer Weiterentwicklung ist die Dampfzufuhr neben der Verbindung mit der Frischdampf führenden Leitung auch mit dem Ausgang für Dampf aus der dem Trockenzylinder nachgeordneten Kondensatabscheidestufe gekoppelt. Die Kopplung der Dampfleitung mit der Dampfzufuhr kann dann über die Frischdampf führende Leitung oder eine ein Gemisch aus Frischdampf und Dampf aus dem Kondensatabscheider führenden Leitung realisiert werden.

In einer vorteilhaften Weiterentwicklung sind zwischen dem Ausgang für Kondensat eines Kondensatabscheiders und dem Wärmetauscher und/oder dem Ausgang für Dampf oder ein Gemisch aus Dampf und Kondensat oder Kondensat am Wärmetauscher und einem Kondensatabscheider und/oder einem Dampfverbraucher Mittel zur Beeinflussung der Ströme, insbesondere Dampfströme angeordnet. Die einzelnen Dampfströme können somit entsprechend den Anforderungen für unterschiedliche, diese abnehmende Verbraucher bereitgestellt werden.

Die erfindungsgemäße Lösung wird nachfolgend anhand einer Figur erläutert. Darin ist im Einzelnen Folgendes dargestellt:

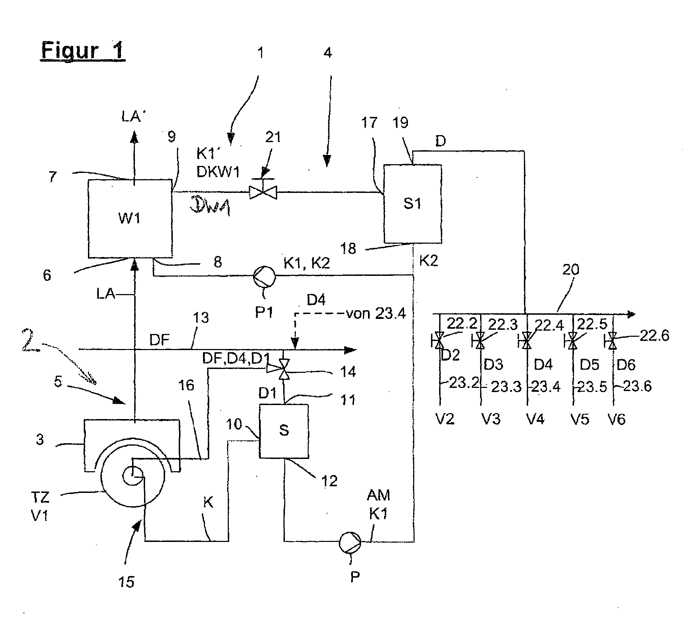

- Figur 1: zeigt in schematisiert stark vereinfachter Darstellung den Grundaufbau und die Grundfunktion eines erfindungsgemäßen Systems zur Wärmerückgewinnung für einen Dampfverbraucher mit einer Kondensatrückführung in Form eines Dampf beheizbaren Trockenzylinders.

Die Figur 1 verdeutlicht in schematisiert stark vereinfachter Darstellung den Grundaufbau und die Grundfunktion eines erfindungsgemäßen Systems 1 zur Wärmerückgewinnung für eine Trockenpartie 2 einer hier im Einzelnen nicht dargestellten Maschine zur Herstellung einer Materialbahn, insbesondere Faserstoffbahn in Form einer Papier-, Karton- oder Tissuebahn, zur Bereitstellung von Dampf für wenigstens einen Dampfverbraucher V. In diesem erfolgt die Erzeugung von Dampf für wenigstens einen Dampfverbraucher V innerhalb der Trockenpartie 2 oder in einem anderen Bereich der Maschine zur Herstellung einer Faserstoffbahn aus zumindest einem Ausgangsfluid AM über ein im Abluftstrom eines Hochtemperatur-Trockenelementes angeordnetes Dampf-/Kondensatsystem 4. In diesem wird Sattdampf, d.h. trocken gesättigter Dampf erzeugt, welcher kein Fluid mehr aufnehmen kann. Die Trockenpartie 2 ist im Einzelnen nicht dargestellt. Aus dieser ist lediglich ein Trockenzylinder TZ dargestellt.

Das System 1 zur Wärmerückgewinnung nutzt dabei ein Dampf-/Kondensatsystem 4, welches Komponenten einer Trockenpartie 2, insbesondere wenigstens einem Trockenzylinder TZ zugeordnet ist. Dabei wird als Wärmeenergieträger für das Dampf-/Kondensatsystem 4 die Wärme eines Abluftstromes LA aus einem Abluftsystem 5 eines einer Hochtemperaturhaube 3 zugeordneten Luftsystems verwendet. Die Hochtemperaturhaube 3 dient dem Aufbringen von Heißluft zumindest mittelbar gegen eine um den Außenumfang des Trockenzylinders TZ wenigstens mittelbar, d.h. direkt oder an einer Bespannung geführten Faserstoffbahn. Das hier nicht dargestellte Luftsystem für die Heißluft der Hochtemperaturhaube 3 ist vorzugsweise, jedoch nicht zwingend als Umluftsystem ausgeführt und weist in der Regel ein hier nicht dargestelltes Umluftgebläse mit einem anschließenden Gasbrenner zum Erwärmen der durchgeführten Umluft auf. Dabei zirkuliert ein großer Teil der Umluft, die durch die Hochtemperaturhaube 3 geführt wird, direkt in diesem Umluftsystem. Da die Umluft jedoch nur einen endlichen Grad an Wasser aufnehmen kann, wird zirkulierende Umluft teilweise über ein Abluftsystem 5 entnommen und durch Zuluft ersetzt. Das Abluftsystem 5 kann verschiedenartig ausgeführt sein. Dieses ist hier im Einzelnen nicht weiter dargestellt. Entscheidend ist, dass zumindest ein Teil, vorzugsweise die gesamte aus dem Luftsystem abzugebende Abluft LA über zumindest einen Wärmetauscher W1 geführt wird: Der Wärmetauscher W1 liegt im Abluftstrom LA. Die Abluft LA wird über zumindest einen Eingang 6 dem Wärmetauscher W1 zugeführt. An zumindest einem Ausgang 7 für Abluft wird der nach Wärmeabgabe an das Ausgangsfluid AM zur Dampferzeugung vorliegende Abluftstrom LA' ausgegeben.

Dargestellt ist eine Ausführung, bei welcher über das Dampf-/Kondensatsystem 4 Dampf mit unterschiedlichem Druckniveau für unterschiedliche Dampfverbraucher V1 bis V6 bereitgestellt werden kann. Als das der Dampferzeugung zugrunde liegende Fluid, insbesondere Ausgangsfluid AM fungiert Kondensat K aus dem, einem Trockenzylinder TZ zugeordneten Dampf-/Kondensatsystem 4. Dieses umfasst zumindest eine Dampfzufuhr 16 zum Trockenzylinder TZ und eine Kondensatabfuhr 15, welche entsprechende Führungseinrichtungen, wie Leitungen, Kanäle e.t.c. umfassen kann. Über die Kondensatabfuhr 15 wird Kondensat beziehungsweise ein Dampf-/Kondensatgemisch K abgeführt, wobei der Anteil an Dampf und Kondensat variieren kann. Dieses wird über eine Kondensatabscheidestufe mittels eines Kondensatabscheiders S in Dampf und Kondensat K1 separiert. Es entsteht am Kondensatabscheider S ein Kondensatstrom K1, der am Ausgang 12 für Kondensat ausgegeben wird und Dampf D1, der an einem Ausgang 11 ausgegeben wird und in eine Hochdruckleitung 13, die mit der Dampfzufuhr 16 zum Trockenzylinder TZ gekoppelt ist und/oder mit weiteren Verbrauchern koppelbar ist, einspeisbar ist. Der Dampf D1 wird über einen Thermokompressor 14 als Niederdruckdampf, insbesondere mit einem Druck im Bereich von 3 bar bis 10 bar nach dem Injektorprinzip in den über eine Leitung 13 bereitgestellten Dampf eingespeist. Der Dampf D1 hat dabei einen geringeren Druck als der Dampf in der Leitung 13. Bei diesem kann es sich um Frischdampf DF oder ein Frischdampf-/Hochdruckdampfgemisch DF, D4 handeln

Das im Dampf-/Kondensatsystem 4 am Kondensatabscheider S anfallende Kondensat K1 wird dann weiter über den Wärmetauscher W1 geführt und hier in Abhängigkeit des gewählten Lösungsansatzes zumindest teilweise verdampft oder lediglich erwärmt. Der Eingang 8 zum Wärmetauscher W1 ist dabei mit dem Ausgang 12 für Kondensat K1 des Kondensatabscheiders S Dampf-/Kondensatsystem 20, insbesondere der Kondensat K1 führenden Leitung gekoppelt.

Der Wärmetauscher W1 ist gemäß einem ersten Lösungsansatz derart ausgeführt und ausgelegt, geeignet zu sein, Dampf DW1 oder zumindest ein Gemisch aus Dampf und Kondensat DKW1 aus dem Ausgangsfluid AM in Form von Kondensat K1 zu erzeugen. Der Wärmetauscher W1 ist dazu vorzugsweise in Form einer Dampferzeugungseinrichtung ausgeführt, wobei in diesem Wärme aus der Abluft LA an das Ausgangsfluid AM, insbesondere Kondensat K1 unter zumindest teilweiser Verdampfung übertragen wird. Der Druck am Eingang 8 kann über zumindest eine Pumpeinrichtung P, P1 gesteuert und/oder geregelt werden. Vorzugsweise ist zumindest eine Pumpeinrichtung P1 im Zulauf zu diesem angeordnet. Verdampft innerhalb des Wärmetauschers W1 nur ein Teil des Kondensats entsteht ein Gemisch aus Dampf und Kondensat DKW1, welches einer weiteren Aufbereitung bedarf, bis der in diesem enthaltenen Dampfanteil den einzelnen Dampfverbrauchern V1 und/oder V2 und/oder V3 und/oder V4 und/oder V5 und/oder V6 zugeführt werden kann. Dazu ist dem Ausgang 9 aus dem Wärmetauscher W1 zumindest eine Kondensatabscheidestufe, umfassend zumindest einen Kondensatabscheider S1 nachgeordnet. Dieser ist derart in das System 1 zur Wärmerückgewinnung eingebunden, dass das abgeschiedene Kondensat K2 ebenfalls dem Wärmetauscher W1 zugeführt wird und verdampft. Dazu ist zumindest ein Eingang 17 des Kondensatabscheiders S1 mit dem Ausgang 9 für das bei Verdampfung innerhalb des Wärmetauschers W1 entstehende Gemisch aus Dampf und Kondensat DKW1 verbunden. Ein Ausgang 18 am Kondensatabscheider S1 für das Kondensat K1 ist mit dem Eingang 8 des Wärmetauschers W1 wenigstens mittelbar, hier über die Kopplung der Zufuhrleitung des Kondensats K1 mit dem Eingang des Wärmetauschers W1 verbunden. D.h., dem Wärmetauscher W1 wird Kondensat K1 und K2 zugeführt. Um das Kondensat K2 ebenfalls zum Wärmetauscher W1 führen zu können, ist der Ankopplung der kondensatführenden Leitung des Kondensats K2 an die Verbindung zwischen dem Ausgang 12 für Kondensat K1 am Kondensatabscheider S und dem Wärmetauscher W1 eine Pumpeinrichtung P vorgeordnet, d.h. diese ist zwischen der Koppelstelle und dem Ausgang 12 aus dem Wärmetauscher W1 angeordnet.

Der Druck liegt in der mit dem Kondensatabscheider S1 gekoppelten Dampfleitung 20 vor und wird derart eingestellt, dass dieser dem geforderten Druck vom Verbraucher mit dem höchsten Dampfdruck entspricht.

Dieser Dampf D wird in eine Dampfleitung 20 oder einen Dampfbehälter eingespeist, welche bzw. welcher mit einer Mehrzahl von Dampfverbrauchern V1 bis V6 wenigstens mittelbar verbindbar ist. Wenigstens mittelbar impliziert die direkte Verbindung als auch indirekte Verbindung über weitere Funktionselemente. Der am Ausgang 19 des Kondensatabscheiders S1 ausgegebene Dampf D wird hier über die Dampfleitung 20, die mit einzelnen Dampfverbrauchern V1 bis V6 wenigstens mittelbar, d.h. direkt oder über weitere Übertragungswege, koppelbar ist, den einzelnen Dampfverbrauchern V1 bis V6 je nach Bedarf mit den entsprechenden Drücken zugeführt. Die Dampfleitung 20 fungiert hier als Verteilleitung. Im dargestellten Fall ist der Verbraucher V2 ein Yankeezylinder, der mit Dampf D2 mit einem Druck von 4 bar bis 9 bar beaufschlagt wird. Der Verbraucher V3 ist beispielsweise ein Dampfblaskasten, der mit Dampf D3 mit einem Druck von 0,5 bar bis 3 bar beaufschlagt wird. V4 ist ein Verbraucher, welcher mit einer Dampfleitung, welche auch der Leitung 13 entsprechen kann, gekoppelt ist. Bei diesem kann es sich auch um V1 in Form des Trockenzylinders TZ handeln. Der Dampf D4 in der mit der Dampfleitung 20 gekoppelten Verbindungsleitung 23.4 weist beispielhaft einen Druck im Bereich zwischen 13 und 19 bar auf. In diesem Fall würde der Dampf D4 in die Dampfleitung 13 und den darin eingespeisten Frischdampf DF eingespeist werden, woraus ein Dampfgemisch DF, D4 resultiert, welches durch einen höheren Druck als der Druck des Dampfes D1 charakterisiert ist. Das sich daraus ergebende Dampfgemisch DF, D4, D1 wird dem Trockenzylinder TZ zugeführt, hier über die Dampfzufuhr 16. Diese ist somit wenigstens mittelbar mit der Dampfleitung 20, hier über die Dampfleitung 13 sowie Verbindungsleitung 23.4 gekoppelt, wobei der erforderliche Dampfdruck für den in den Frischdampf DF einzuspeisenden Dampf D4 über Mittel 22.4 eingestellt werden kann, ferner die wahlweise Kopplung oder Entkopplung von der Dampfleitung 20. V5 ist ein Dampfbefeuchter, der mit Dampf mit einem Druck von 0,5 bar beaufschlagt wird. V6 sind weitere Nebenverbraucher.

Innerhalb der Verbindung zwischen Wärmetauscher W1 und Kondensatabscheider S1, insbesondere dem Eingang 17 für das Gemisch aus Dampf und Kondensat DWK1 sind Mittel 21 zur Beeinflussung zumindest eines das Gemisch charakterisierenden Parameters, insbesondere zur Druckbeeinflussung vorgesehen. Diese umfassen zumindest eine oder eine Vielzahl von Ventileinrichtungen, insbesondere Steuer- und/oder Regelventileinrichtungen.

Wie bereits ausgeführt kann der Wärmetauscher W1 in einer ersten und in der Figur 1 dargestellten Ausführung als Dampferzeuger konzipiert sein. Gemäß einem zweiten Lösungsansatz dient dieser lediglich der Erwärmung frei von einer Verdampfung des über diesen geführten Kondensatstromes. Das in diesem erwärmte Kondensat K1, K2, am Austritt als Kondensat K1', K2' vorliegend, wird in diesem Fall nach Austritt aus dem Wärmetauscher W1 unter zumindest teilweiser Entstehung von Dampf entspannt. Die Entspannung kann bei entsprechender Ausgestaltung über die Mittel 21 erfolgen.

Die Kopplung der Dampfleitungen der einzelnen Kondensatabscheider S, S1 mit der Dampfleitung 13 oder der Dampfleitung 20 und über diese mit den einzelnen Dampfverbrauchern erfolgt vorzugsweise über entsprechende Mittel 22.2 bis 22.6 zur wahlweisen Kopplung/Entkopplung und/oder Steuerung der Dampfströme und/oder der den Dampf charakterisierenden Parameter in der jeweiligen Verbindung zwischen Dampfverbraucher und Dampfleitung oder dem Dampfbehälter, im einfachsten Fall in Form von Schalt- und/oder Steuer- oder Regeleinrichtungen, die beispielsweise Ventileinrichtungen umfassen. Vorzugsweise handelt es sich hier auch um Druckregelventile. Andere Ausführungen sind denkbar.

Die erfindungsgemäße Lösung ist nicht auf die Figur 1 dargestellte Ausführung beschränkt. Vorteilhafte Weiterentwicklungen, den gleichen Erfindungsgedanken betreffend, sind ebenfalls mit eingeschlossen. Entscheidend ist, dass die Wärme eines Abluftstromes, welche ohnehin bei einer Hochtemperaturhaube anfällt, zumindest teilweise zur Dampferzeugung in einem Dampf-/Kondensatsystem 4 genutzt wird, wobei der dabei entstehende Dampf Dampfverbrauchern entweder in der Trockenpartie selbst oder anderen Abnehmern zugeführt werden kann. Gemäß einer besonders vorteilhaften Ausführung erfolgt die Dampfbereitstellung für einen mit Dampf beheizbaren Trockenzylinder und/oder Dampfblaskästen. Durch die Anbindung dieser an die Kopplung einzelner Dampfströme führende Leitungen miteinander, können unterschiedliche Drücke in den einzelnen Leitungen bereitgestellt werden, die wiederum das Betreiben der einzelnen Dampfverbraucher mit Dampf mit unterschiedlichem Druckniveau ermöglichen. Durch die intelligente Schaltung von Steuer-/Regelventilen kann dabei an jeder Stelle im System der erforderliche Dampfdruck eingestellt werden, der an den einzelnen Verbrauchern benötigt wird sowie die höchstmögliche Wärmerückgewinnungsleistung im System eingestellt werden. Dies erfolgt im einfachsten Fall durch das Umschalten der einzelnen Ventileinrichtungen auf die unterschiedlichen Druckverbraucher.

### Bezugszeichenliste

- 1: System zur Wärmerückgewinnung
- 2: Trockenpartie
- 3: Hochtemperaturhaube
- 4: Dampf-/Kondensatsystem
- 5: Abluftsystem
- 6: Eingang Abluft am Wärmetauscher
- 7: Ausgang Abluft am Wärmetauscher
- 8: Eingang Wärmetauscher
- 9: Ablauf/Ausgang am Wärmetauscher
- 10: Eingang Kondensatabscheider S
- 11: Ausgang für Dampf am Kondensatabscheider S
- 12: Ausgang für Kondensat am Kondensatabscheider S
- 13: Leitung, Hochdruckleitung
- 14: Thermokompressor
- 15: Abfuhr
- 16: Dampfzufuhr
- 17: Eingang Kondensatabscheider S
- 18: Ausgang für Kondensat am Kondensatabscheider S
- 19: Ausgang für Dampf am Kondensatabscheider S
- 20: Dampfleitung, Hochdruckleitung
- 21: Mittel
- 22.2,22.3,22.4,22.5,22.6: Mittel zur wahlweisen Kopplung/Entkopplung und/oder Steuerung der Dampfströme und/oder der den Dampf charakterisierenden Parameter
- 23.2,23.3,23.4,23.5,23.6: Verbindungsleitung
- AM: Ausgangsfluid
- D, D1, D2, D3, D4, D5, D6: Dampf
- DF: Frischdampf
- DKW1: Gemisch aus Dampf und Kondensat
- K, K1, K2: Dampf-/Kondensatgemisch
- K1': erhitztes Kondensat
- LA: Abluft
- LA': Abluft nach Durchlaufen des Wärmetauschers
- P, P1: Pumpeinrichtung
- S: Kondensatabscheider
- S1: Kondensatabscheider

## Patentansprüche

1. Verfahren zur Wärmerückgewinnung für eine Trockenpartie (2) einer Maschine zur Herstellung einer Faserstoffbahn (F), insbesondere einer Papier-, Karton-, oder Tissuebahn, wobei die Faserstoffbahn (F) zumindest mit einem dampfbeheizten Trockenzylinder (TZ) und zumindest einem Hochtemperatur-Trockenelement (3) mit Heißluft unter Anfall eines Abluftstromes (LA) getrocknet wird, wobei der zumindest eine Trockenzylinder (1) zumindest teilweise mit Frischdampf (D) beaufschlagt wird, wobei das Kondensat-/ Dampfgemisch (K) des zumindest einen Trockenzylinders (TZ) einer Kondensatabscheidestufe (S) zugeführt wird, wobei der Dampf (D1) aus der Kondensatabscheidestufe dem Frischdampf (DF) oder einem Frischdampf/- Hochdruckdampfgemisch (DF,D1) zugeführt wird, wobei zumindest ein Teil des Kondensats (K1) aus der dem zumindest einen Trockenzylinder (TZ) nachgeschalteten Kondensatabscheidestufe (S) einem Wärmetauscher (W1) im Abluftstrom (LA) des Hochtemperatur-Trockenelementes (3) zugeführt wird, und wobei das Kondensat (K1,K2) dort erhitzt wird und Energie der Abluft (LA) aufnimmt;
wobei der zumindest eine Teil des Kondensats (K1) aus der dem zumindest einen Trockenzylinder (TZ) nachgeschalteten Kondensatabscheidestufe (S) im Wärmetauscher (W1) entweder zumindest teilweise unter Entstehung eines Gemisches aus Dampf und Kondensat (DKW1), vorzugsweise vollständig verdampft wird oder im Wärmetauscher (W1) erhitzt und nach dem Ausgang aus dem Wärmetauscher (W1) unter zumindest teilweiser Verdampfung entspannt wird, und wobei der entstehende Dampf in eine Dampfleitung (20) und/oder einen Dampfbehälter eingespeist wird,
**dadurch gekennzeichnet, dass** die Dampfleitung (20) und/oder der Dampfbehälter wenigstens mittelbar mit zumindest zwei Dampfverbrauchern (V1, V2, V3, V4, V5, V6) verbindbar ist bzw. sind und die Dampfleitung (20) und/oder der Dampfbehälter, wahlweise mit zumindest einem der Dampfverbraucher (V1, V2, V3, V4, V5, V6) verbunden wird bzw. werden.

2. Verfahren nach Anspruch 1,
**dadurch gekennzeichnet,**
**dass** der mit der Dampfleitung (20) und/oder dem Dampfbehälter zu verbindende Dampfverbraucher (V1, V2, V3; V4, V5, V6) in Abhängigkeit
einer die Menge der Abluft (AL) und/oder Temperatur der Abluft (AL) wenigstens mittelbar charakterisierenden Größe gewählt wird.

3. Verfahren nach Anspruch 1 oder 2,
**dadurch gekennzeichnet,**
**dass** zwei oder eine Mehrzahl von Dampfverbrauchern (V1, V2, V3, V4, V5, V6) vorgesehen wird, die einzeln und/oder in Gruppen wahlweise mit der Dampfleitung (20) und/oder dem Dampfbehälter verbindbar sind.

4. Verfahren nach einem der vorherigen Ansprüche,
**dadurch gekennzeichnet,**
**dass** zwei oder eine Mehrzahl von Dampfverbrauchern (V1, V2, V3, V4, V5, V6) vorgesehen wird, die einzeln oder in Gruppen mit der Dampfleitung (20) oder dem Dampfbehälter verbindbar sind, wobei der Druck des Dampfes in der jeweiligen Verbindung (23.2, 23.3, 23.4, 23.5, 23.6) zwischen Dampfverbraucher (V1,V2, V3, V4, V5, V6) und Dampfleitung (20) oder dem Dampfbehälter gesteuert, vorzugsweise geregelt wird.

5. Verfahren nach einem der Ansprüche 1 bis 4,
**dadurch gekennzeichnet,**
**dass** der zumindest eine Teil des im Wärmetauscher (W1) entweder zumindest teilweise verdampften oder in diesem erhitzten und danach entspannten Kondensats (K1, K2) zumindest einer weiteren Kondensatabscheidestufe zugeführt wird.

6. Verfahren nach Anspruch 5,
**dadurch gekennzeichnet,**
**dass** zumindest ein Teil, vorzugsweise der größte Teil des Kondensats (K2) zumindest einer der weiteren Kondensatabscheidestufen dem Wärmetauscher (W1) wieder zugeführt wird.

7. Verfahren nach einem der Ansprüche 1 bis 6,
**dadurch gekennzeichnet,**
**dass** der Dampf als Hochdruckdampf mit zumindest einem der nachfolgenden Parameter
- Druck im Bereich von 10 bar bis 20 bar,
- Temperatur im Bereich von 160°C bis 220°C, vorzugsweise 179°C/180°C bis 212°C/213°C
in die Dampfleitung (20) oder einen Dampfbehälter eingespeist wird.

8. Verfahren nach einem der Ansprüche 1 bis 7,
**dadurch gekennzeichnet,**
**dass** der entstehende Dampf in eine Dampfleitung (20) in Form einer zentralen Verteilerleitung eingespeist wird, die mit einem oder mehreren Dampfverbrauchern (V1, V2, V3, V4, V5, V6) verbunden oder verbindbar ist.

9. Verfahren nach einem der Ansprüche 1 bis 8,
**dadurch gekennzeichnet,**
**dass** zumindest ein Teil des entstehenden Dampfes in eine Frischdampf (DF) führende Leitung (13) eingespeist wird.

10. Verfahren nach einem der Ansprüche 1 bis 8,
**dadurch gekennzeichnet,**
**dass** zumindest ein Teil des entstehenden Druckdampfes in eine ein Dampfgemisch aus Frischdampf (DF) und Dampf (D1) aus der zumindest einem Trockenzylinder (TZ) nachgeschalteten Kondensatabscheidestufe führenden Leitung eingespeist wird.

11. Verfahren nach einem der Ansprüche 1 bis 10,
**dadurch gekennzeichnet,**
**dass** die Verbindung der Dampfleitung (20) und/oder des Dampfbehälters mit einem oder mehreren Dampfverbrauchern (V1, V2, V3, V4, V5, V6) über eine schaltbare Ventilanordnung realisiert wird.

12. Verfahren nach einem der vorherigen Ansprüche,
**dadurch gekennzeichnet,**
**dass** die Parameter des entstehenden Dampfes in Abhängigkeit einer die Menge der Abluft (AL) und/oder Temperatur der Abluft (AL) wenigstens mittelbar charakterisierenden Größe gesteuert werden.

13. Maschine zur Herstellung einer Materialbahn, insbesondere einer Faserstoffbahn in Form einer Papier-, Karton-oder Tissuebahn, mit einer Trockenpartie und einem System (1) zur Wärmerückgewinnung für die Trockenpartie (2) umfassend zumindest einen dampfbeheizten Zylinder (TZ) mit einem diesem zugeordneten Dampf-/Kondensatsystem (4) und wenigstens ein Hochtemperatur-Trockenelement (3) zur zumindest mittelbaren Beaufschlagung der Materialbahn mit Heißluft mit einem diesem zugeordneten Abluftsystem (5), einen im Abluftsystem (5) angeordneten Wärmetauscher (W1); zumindest eine im Dampf-/Kondensatsystem (4) dem Trockenzylinder (TZ) nachgeordnete und zumindest einen Kondensatabscheider (S) umfassende Kondensatabscheidestufe, deren Ausgang (12) für Kondensat (K1) mit dem Abluftstrom (LA) über den Wärmetauscher (W1) wenigstens mittelbar wärmetechnisch gekoppelt ist,
wobei der Wärmetauscher (W1) derart ausgeführt und angeordnet ist, geeignet zu sein, das über diesen geführte Kondensat (K1, K2) aus der zumindest einen, dem Trockenzylinder (TZ) im Dampf-/Kondensatsystem (4) nachgeordneten Kondensatabscheidestufe zumindest teilweise zu verdampfen, und wobei der Ausgang (9) für Dampf (DW1) oder ein Gemisch aus Dampf und Kondensat (DKW1) am Wärmetauscher (W1) wenigstens mittelbar mit einer Dampfleitung (20) und/oder einem Dampfbehälter gekoppelt ist,
**dadurch gekennzeichnet, dass** die Dampfleitung (20) und/oder der Dampfbehälter mit wenigstens zwei Dampfverbrauchern (V₁,V₂,V₃,V₄,V₅,V₆) wenigstens mittelbar verbindbar ist bzw. sind.

14. Maschine zur Herstellung einer Materialbahn, insbesondere einer Faserstoffbahn in Form einer Papier-, Karton- oder Tissuebahn, mit einer Trockenpartie und einem System (1) zur Wärmerückgewinnung für die Trockenpartie (2) umfassend zumindest einen dampfbeheizten Zylinder (TZ) mit einem diesem zugeordneten Dampf-/Kondensatsystem (4) und wenigstens ein Hochtemperatur-Trockenelement (3) zur zumindest mittelbaren Beaufschlagung der Materialbahn mit Heißluft mit einem diesem zugeordneten Abluftsystem (5), einen im Abluftsystem (5) angeordneten Wärmetauscher (W1); zumindest eine im Dampf-/Kondensatsystem (4) dem Trockenzylinder nachgeordnete und zumindest einen Kondensatabscheider (S) umfassende Kondensatabscheidestufe, deren Ausgang (12) für Kondensat (K1) mit dem Abluftstrom (LA) über den Wärmetauscher (W1) wenigstens mittelbar wärmetechnisch gekoppelt ist,
wobei der Wärmetauscher (W1) derart ausgeführt und angeordnet ist, geeignet zu sein, das über diesen geführte Kondensat (K1, K2) aus der zumindest einen, dem Trockenzylinder (TZ) im Dampf-/Kondensatsystem (4) nachgeordneten Kondensatabscheidestufe auf Temperaturen im Bereich von 150°C bis 240°C, insbesondere 160°C bis 220°C, vorzugsweise 179°C bis 212°C zu erhitzen, und
wobei der Ausgang (9) für erhitztes Kondensat aus dem Wärmetauscher (W1) wenigstens mittelbar mit einer Dampfleitung (20) und/oder einem Dampfbehälter unter Zvvischenschaltung von Mitteln (21) zur Entspannung des erhitzten Kondensats unter zumindest teilweiser Verdampfung gekoppelt ist,
**dadurch gekennzeichnet, dass** die Dampfleitung (20) und/oder der Dampfbehälter mit wenigstens zwei Dampfverbrauchern (V₁,V₂,V₃,V₄,V₅,V₆) wenigstens mittelbar verbindbar ist bzw. sind.

15. Maschine nach einem der Ansprüche 13 oder 14,
**dadurch gekennzeichnet,**
**dass** dem Ausgang (9) für Dampf (DW1) oder ein Gemisch aus Dampf und Kondensat (DKW1) oder erhitztes Kondensat (K1') am Wärmetauscher (W1) zumindest eine, vorzugsweise eine Mehrzahl von parallel oder in Reihe zueinander geschalteten Kondensatabscheidestufen, umfassend zumindest jeweils einen Kondensatabscheider (S1) nachgeordnet sind, deren Ausgang (19) für Dampf wenigstens mittelbar mit der Dampfleitung (20) gekoppelt ist.

16. Maschine nach Anspruch 15,
**dadurch gekennzeichnet,**
**dass** ein Ausgang (18) für Kondensat (K2) zumindest einer dem Wärmetauscher nachgeordneten Kondensatabscheidestufe mit dem Eingang (8) am Wärmetauscher (W1) gekoppelt ist.

17. Maschine nach einem der Ansprüche 13 bis 16,
**dadurch gekennzeichnet,**
**dass** eine Mehrzahl von Dampfverbrauchern (V1, V2, V3, V4, V5, V6) vorgesehen ist, die mit der Dampfleitung (20) oder dem Dampfbehälter verbunden oder verbindbar sind.:

18. Maschine nach einem der Ansprüche 13 bis 17,
dadurch gekenntzeichnet,
dass eine Mehrzahl von Dampfverbrauchern (V1 ,V2, V3, V4, V5, V6) vorgesehen ist, die jeweils einzeln und/oder in Gruppen mit der Dampfleitung (20) oder dem Dampfbehälter verbunden oder verbindbar sind und Mittel (22.2, 22.3, 22.4, 22.5, 22.6) zur wahlweisen Kopplung/Entkopplung und/oder Steuerung der Dampfströme und/oder der den Dampf charakterisierenden Parameter in der jeweiligen Verbindung (23.2, 23.3, 23.4, 23.5, 23.6) zwischen Dampfverbraucher (V1 ,V2, V3, V4, V5, V6) und Dampfleitung (20) oder dem Dampfbehälter vorgesehen sind.

19. Maschine nach einem der Ansprüche 13 bis 18,
**dadurch gekennzeichnet,**
**dass** der Trockenzylinder (TZ) eine Dampfzufuhr (16) aufweist und die Dampfleitung (20) wenigstens mittelbar mit der Dampfzufuhr des Trockenzytinders (TZ) verbunden ist.

20. Maschine nach Anspruch 19,
**dadurch gekennzeichnet,**
**dass** die Dampfzufuhr des Trockerrzylinders (TZ) mit einer Frischdampf führenden Leitung (13) und dem Ausgang (11) für Dampf (D1) aus der dem Trockenzylinder (TZ) nachgeordneten Kondensatabscheidestufe gekoppelt ist und die Kopplung der Dampfleitung (20) mit der Dampfzufuhr über die Frischdampf (DF) führende Leitung (13) oder eine ein Gemisch aus Frischdampf (DF) und Dampf (D1) aus dem Kondensatabscheider führenden Leitung geführt wird.

21. Maschine nach einem der Ansprüche 13 bis 20,
**dadurch gekennzeichnet,**
**dass** vor dem Eingang (8) für Kondensat (K1, K2) am Wärmetauscher (W1) und/oder zwischen dem Ausgang (9) für Dampf (DW1) oder ein Gemisch aus Dampf und Kondensat (DKW1) am Wärmetauscher (W1) und einem Kondensatabscheider (S1) und/oder einem Dampfverbraucher (V, V1, V2, V3, V4, V5, V6) Mittel/Einrichtungen (21) zur Beeinflussung der Dampfströme, insbesondere Mittel/Einrichtungen zur Drucksteuerung und/oder Druckregelung angeordnet sind.

## Claims

1. Method for recovering heat for a drying section (2) of a machine for producing a fibrous web (F), in particular a paper, cardboard or tissue web, the fibrous web (F) being dried at least by way of a steam-heated drying cylinder (TZ) and at least one high-temperature drying element (3) with hot air with the production of a waste air stream (LA), the at least one drying cylinder (1) being loaded at least partially with fresh steam (D), the condensate/steam mixture (K) of the at least one drying cylinder (TZ) being fed to a condensate separating stage (S), the steam (D1) being fed from the condensate separating stage to the fresh steam (DF) or to a fresh steam/high-pressure steam mixture (DF, D1), at least part of the condensate (K1) from the condensate separating stage (S) which is connected downstream of the at least one drying cylinder (TZ) being fed to a heat exchanger (W1) in the waste air stream (LA) of the high-temperature drying element (3), and the condensate (K1, K2) being heated there and absorbing energy of the waste air (LA), the at least one part of the condensate (K1) from the condensate separating stage (S) which is connected downstream of the at least one drying cylinder (TZ) being evaporated in the heat exchanger (W1) either at least partially with the production of a mixture of steam and condensate (DKW1), preferably completely, or being heated in the heat exchanger (W1) and being expanded with at last partial evaporation after exiting from the heat exchanger (W1), and the steam which is produced being fed into a steam line (20) and/or a steam vessel, **characterized in that** the steam line (20) and/or the steam vessel can be connected at least indirectly to at least two steam consumers (V1, V2, V3, V4, V5, V6), and the steam line (20) and/or the steam vessel are/is connected selectively to at least one of the steam consumers (V1, V2, V3, V4, V5, V6).

2. Method according to Claim 1, **characterized in that** the steam consumer (V1, V2, V3, V4, V5, V6) to be connected to the steam line (20) and/or the steam vessel is selected as a function of a variable which at least indirectly characterizes the quantity of waste air (AL) and/or temperature of the waste air (AL).

3. Method according to Claim 1 or 2, **characterized in that** two or more steam consumers (V1, V2, V3, V4, V5, V6) are provided which can be selectively connected individually and/or in groups to the steam line (20) and/or the steam vessel.

4. Method according to one of the preceding claims, **characterized in that** two or more steam consumers (V1, V2, V3, V4, V5, V6) are provided which can be connected individually or in groups to the steam line (20) or the steam vessel, the pressure of the steam in the respective connection (23.2, 23.3, 23.4, 23.5, 23.6) between steam consumer (V1, V2, V3, V4, V5, V6) and steam line (20) or the steam vessel being controlled, preferably being regulated.

5. Method according to one of Claims 1 to 4, **characterized in that** the at least one part of the condensate (K1, K2) which is either evaporated at least partially in the heat exchanger (W1) or is heated in the latter and subsequently expanded is fed to at least one further condensate separating stage.

6. Method according to Claim 5, **characterized in that** at least one part, preferably the greatest part of the condensate (K2) of at least one of the further condensate separating stages is fed to the heat exchanger (W1) again.

7. Method according to one of Claims 1 to 6, **characterized in that** the steam is fed as high-pressure steam having at least one of the following parameters:
- pressure in the range from 10 bar to 20 bar,
- temperature in the range from 160°C to 220°C, preferably from 179°C/180°C to 212°C/213°C,
into the steam line (20) or a steam vessel.

8. Method according to one of Claims 1 to 7, **characterized in that** the steam which is produced is fed into a steam line (20) in the form of a central distributor line which is connected or can be connected to one or more steam consumers (V1, V2, V3, V4, V5, V6) .

9. Method according to one of Claims 1 to 8, **characterized in that** at least one part of the steam which is produced is fed into a line (13) which conducts fresh steam (DF).

10. Method according to one of Claims 1 to 8, **characterized in that** at least one part of the pressurized steam which is produced is fed into a line which conducts a steam mixture comprising fresh steam (DF) and steam (D1) out of the condensate separating stage which is connected downstream of at least one drying cylinder (TZ).

11. Method according to one of Claims 1 to 10, **characterized in that** the connection of the steam line (20) and/or the steam vessel to one or more steam consumers (V1, V2, V3, V4, V5, V6) is realized via a switchable valve arrangement.

12. Method according to one of the preceding claims, **characterized in that** the parameters of the steam which is produced are controlled as a function of a variable which at least indirectly characterizes the quantity of waste air (AL) and/or temperature of the waste air (AL).

13. Machine for producing a material web, in particular a fibrous web in the form of a paper, cardboard or tissue web, having a drying section and a system (1) for recovering heat for the drying section (2), comprising at least one steam-heated cylinder (TZ) with a steam/condensate system (4) which is assigned to it and at least one high-temperature drying element (3) for at least indirect loading of the material web with hot air with a waste air system (5) which is assigned to the said high-temperature drying element (3), a heat exchanger (W1) which is arranged in the waste air system (5); at least one condensate separating stage which is arranged downstream of the drying cylinder (TZ) in the steam/condensate system (4), comprises at least one condensate separator (S), and the outlet (12) for condensate (K1) of which is thermally coupled at least indirectly to the waste air stream (LA) via the heat exchanger (W1), the heat exchanger (W1) being configured and arranged so as to be suitable to at least partially evaporate the condensate (K1, K2) which is conducted via the said heat exchanger (W1) from the at least one condensate separating stage which is arranged downstream of the drying cylinder (TZ) in the steam/condensate system (4), and the outlet (9) for steam (DW1) or a mixture comprising steam and condensate (DKW1) on the heat exchanger (W1) being coupled at least indirectly to a steam line (20) and/or a steam vessel, **characterized in that** the steam line (20) and/or the steam vessel can be connected at least indirectly to at least two steam consumers (V1, V2, V3, V4, V5, V6).

14. Machine for producing a material web, in particular a fibrous web in the form of a paper, cardboard or tissue web, having a drying section and a system (1) for recovering heat for the drying section (2), comprising at least one steam-heated cylinder (TZ) with a steam/condensate system (4) which is assigned to it and at least one high-temperature drying element (3) for at least indirect loading of the material web with hot air with a waste air system (5) which is assigned to the said high-temperature drying element (3), a heat exchanger (W1) which is arranged in the waste air system (5); at least one condensate separating stage which is arranged downstream of the drying cylinder in the steam/condensate system (4), comprises at least one condensate separator (S), and the outlet (12) for condensate (K1) of which is thermally coupled at least indirectly to the waste air stream (LA) via the heat exchanger (W1), the heat exchanger (W1) being configured and arranged so as to be suitable to heat the condensate (K1, K2) which is conducted via the said heat exchanger (W1) from the at least one condensate separating stage which is arranged downstream of the drying cylinder (TZ) in the steam/condensate system (4) to temperatures in the range from 150°C to 240°C, in particular from 160°C to 220°C, preferably from 179°C to 212°C, and the outlet (9) for heated condensate from the heat exchanger (W1) being coupled at least indirectly to a steam line (20) and/or a steam vessel, with means (21) for expanding the heated condensate with at least partial evaporation being connected in between, **characterized in that** the steam line (20) and/or the steam vessel can be connected at least indirectly to at least two steam consumers (V1, V2, V3, V4, V5, V6).

15. Machine according to either of Claims 13 and 14, **characterized in that** at least one, preferably a plurality of condensate separating stages which are connected in parallel or in series to one another, comprising at least in each case one condensate separator (S1), the outlet (19) for steam of which condensate separating stage is coupled at least indirectly to the steam line (20), are arranged downstream of the outlet (9) for steam (DW1) or a mixture comprising steam and condensate (DKW1) or heated condensate (K1') on the heat exchanger (W1).

16. Machine according to Claim 15, **characterized in that** an outlet (18) for condensate (K2) of at least one condensate separating stage which is arranged downstream of the heat exchanger is coupled to the inlet (8) on the heat exchanger (W1).

17. Machine according to one of Claims 13 to 16, **characterized in that** a plurality of steam consumers (V1, V2, V3, V4, V5, V6) are provided which are connected or can be connected to the steam line (20) or the steam vessel.

18. Machine according to one of Claims 13 to 17, **characterized in that** a plurality of steam consumers (V1, V2, V3, V4, V5, V6) are provided which are connected or can be connected in each case individually and/or in groups to the steam line (20) or the steam vessel and means (22.2, 22.3, 22.4, 22.5, 22.6) are provided for selective coupling/decoupling and/or controlling of the steam streams and/or parameters which characterize the steam in the respective connection (23.2, 23.3, 23.4, 23.5, 23.6) between steam consumer (V1, V2, V3, V4, V5, V6) and steam line (20) or the steam vessel.

19. Machine according to one of Claims 13 to 18, **characterized in that** the drying cylinder (TZ) has a steam feed (16) and the steam line (20) is connected at least indirectly to the steam feed of the drying cylinder (T2) .

20. Machine according to Claim 19, **characterized in that** the steam feed of the drying cylinder (TZ) is coupled to a line (13) which conducts fresh steam and to the outlet (11) for steam (D1) from the condensate separating stage which is arranged downstream of the drying cylinder (TZ), and the coupling of the steam line (20) to the steam feed is conducted via the line (13) which conducts fresh steam (DF) or a line which conducts a mixture comprising fresh steam (DF) and steam (D1) from the condensate separator.

21. Machine according to one of Claims 13 to 20, **characterized in that** means/devices (21) for influencing the steam streams, in particular means/devices for pressure control and/or pressure regulation are arranged upstream of the inlet (8) for condensate (K1, K2) on the heat exchanger (W1) and/or between the outlet (9) for steam (DW1) or a mixture comprising steam and condensate (DKW1) on the heat exchanger (W1) and a condensate separator (S1) and/or a steam consumer (V, V1, V2, V3, V4, V5, V6).

## Revendications

1. Procédé de récupération de chaleur pour une section sèche (2) d'une machine de fabrication d'une bande fibreuse (F), en particulier d'une bande de papier, de carton ou de papier-tissu, la bande fibreuse (F) étant séchée au moins avec un cylindre de séchage (TZ) chauffé à la vapeur et avec au moins un élément de séchage à haute température (3) avec de l'air chaud en produisant un courant d'air d'évacuation (LA), l'au moins un cylindre de séchage (1) étant sollicité au moins en partie avec de la vapeur fraîche (D), le mélange de condensat/de vapeur (K) de l'au moins un cylindre de séchage (TZ) étant acheminé à un étage de séparation de condensat (S), la vapeur (D1) de l'étage de séparation de condensat étant acheminée à la vapeur fraîche (DF) ou à un mélange de vapeur fraîche/de vapeur à haute pression (DF, D1), au moins une partie du condensat (K1) provenant de l'étage de séparation de condensat (S) monté en aval de l'au moins un cylindre de séchage (TZ) étant acheminée à un échangeur de chaleur (W1) dans le courant d'air d'évacuation (LA) de l'élément de séchage à haute température (3), et le condensat (K1, K2) y étant chauffé et recevant l'énergie de l'air d'évacuation (LA) ;
l'au moins une partie du condensat (K1) provenant de l'étage de séparation de condensat (S) monté en aval de l'au moins un cylindre de séchage (TZ) étant évaporée dans l'échangeur de chaleur (W1) au moins en partie avec formation d'un mélange de vapeur et de condensat (DKW1), de préférence complètement, ou étant chauffée dans l'échangeur de chaleur (W1) ou étant détendue après la sortie de l'échangeur de chaleur (W1) avec évaporation au moins partielle, et
la vapeur produite étant injectée dans une conduite de vapeur (20) et/ou dans un récipient de vapeur,
**caractérisé en ce que** la conduite de vapeur (20) et/ou le récipient de vapeur peut ou peuvent être connectés au moins indirectement à au moins deux consommateurs de vapeur (V1, V2, V3, V4, V5, V6) et la conduite de vapeur (20) et/ou le récipient de vapeur est ou sont connectés de manière sélective à au moins l'un des consommateurs de vapeur (V1, V2, V3, V4, V5, V6).

2. Procédé selon la revendication 1,
**caractérisé en ce que**
le consommateur de vapeur (V1, V2, V3, V4, V5, V6) devant être connecté à la conduite de vapeur (20) et/ou au récipient de vapeur est sélectionné en fonction d'une grandeur caractérisant au moins de manière indirecte la quantité d'air d'évacuation (AL) et/ou la température de l'air d'évacuation (AL).

3. Procédé selon la revendication 1 ou 2,
**caractérisé en ce que**
deux consommateurs de vapeur ou une pluralité de consommateurs de vapeur (V1, V2, V3, V4, V5, V6) sont prévus, lesquels peuvent être connectés individuellement et/ou par groupes de manière sélective à la conduite de vapeur (20) et/ou au récipient de vapeur.

4. Procédé selon l'une quelconque des revendications précédentes,
**caractérisé en ce que**
deux consommateurs de vapeur ou une pluralité de consommateurs de vapeur (V1, V2, V3, V4, V5, V6) sont prévus, lesquels peuvent être connectés individuellement ou par groupes à la conduite de vapeur (20) ou au récipient de vapeur, la pression de la vapeur dans la connexion respective (23.2, 23.3, 23.4, 23.5, 23.6) entre le consommateur de vapeur (V1, V2, V3, V4, V5, V6) et la conduite de vapeur (20) ou le récipient de vapeur étant commandée, de préférence régulée.

5. Procédé selon l'une quelconque des revendications 1 à 4,
**caractérisé en ce que**
l'au moins une partie du condensat (K1, K2) soit au moins partiellement évaporé dans l'échangeur de chaleur (W1) soit chauffé dans celui-ci puis détendu est acheminée à au moins un étage de séparation de condensat supplémentaire.

6. Procédé selon la revendication 5,
**caractérisé en ce**
**qu'**au moins une partie, de préférence la majeure partie du condensat (K2) d'au moins l'un des étages de séparation de condensat supplémentaires est à nouveau acheminée à l'échangeur de chaleur (W1).

7. Procédé selon l'une quelconque des revendications 1 à 6,
**caractérisé en ce que**
la vapeur est injectée sous forme de vapeur haute pression avec au moins l'un des paramètres suivants
- une pression dans une plage de 10 bar à 20 bar,
- une température dans une plage de 160°C à 220°C, de préférence de 179°C/180°C à 212°C/213°C
dans la conduite de vapeur (20) ou dans un récipient de vapeur.

8. Procédé selon l'une quelconque des revendications 1 à 7,
**caractérisé en ce que**
la vapeur produite est injectée dans une conduite de vapeur (20) en forme de conduite de distribution centrale qui est ou peut être connectée à un ou plusieurs consommateurs de vapeur (V1, V2, V3, V4, V5, V6).

9. Procédé selon l'une quelconque des revendications 1 à 8,
**caractérisé en ce**
**qu'**au moins une partie de la vapeur produite est injectée dans une conduite (13) conduisant de la vapeur fraîche (DF).

10. Procédé selon l'une quelconque des revendications 1 à 8,
**caractérisé en ce**
**qu'**au moins une partie de la vapeur sous pression produite est injectée dans une conduite conduisant un mélange de vapeur constitué de vapeur fraîche (DF) et de vapeur (D1) provenant de l'étage de séparation de condensat monté en aval d'au moins un cylindre de séchage (T2).

11. Procédé selon l'une quelconque des revendications 1 à 10,
**caractérisé en ce que**
la connexion de la conduite de vapeur (20) et/ou du récipient de vapeur à un ou plusieurs consommateurs de vapeur (V1, V2, V3, V4, V5, V6) est réalisée par le biais d'un agencement de soupape commutable.

12. Procédé selon l'une quelconque des revendications précédentes,
**caractérisé en ce que**
les paramètres de la vapeur produite sont commandés en fonction d'une grandeur caractérisant au moins de manière indirecte la quantité d'air d'évacuation (AL) et/ou la température de l'air d'évacuation (AL).

13. Machine de fabrication d'une bande de matériau, en particulier d'une bande fibreuse sous forme d'une bande de papier, de carton ou de papier-tissu, comprenant une section sèche et un système (1) de récupération de chaleur pour la section sèche (2), comprenant au moins un cylindre (TZ) chauffé à la vapeur avec un système de vapeur/condensat (4) associé à celui-ci et au moins un élément de séchage à haute température (3) pour solliciter au moins de manière indirecte la bande de matériau avec de l'air chaud avec un système d'air d'évacuation (5) associé à celui-ci, un échangeur de chaleur (W1) disposé dans le système d'air d'évacuation (5) ; au moins un étage de séparation de condensat monté en aval du cylindre de séchage (TZ) dans le système de vapeur/condensat (4) et comprenant au moins un séparateur de condensat (S), dont la sortie (12) pour le condensat (K1) est accouplée au courant d'air d'évacuation (LA) par le biais de l'échangeur de chaleur (W1) au moins de manière indirecte par une technique thermique,
l'échangeur de chaleur (W1) étant réalisé et disposé de telle sorte qu'il soit approprié pour évaporer au moins en partie le condensat (K1, K2) guidé par le biais de celui-ci hors de l' au moins un étage de séparation de condensat monté en aval du cylindre de séchage (TZ) dans le système de vapeur/condensat (4), et
la sortie (9) pour la vapeur (DW1) ou un mélange de vapeur et de condensat (DKW1) au niveau de l'échangeur de chaleur (W1) étant accouplé(e) au moins indirectement à une conduite de vapeur (20) et/ou à un récipient de vapeur,
**caractérisée en ce que** la conduite de vapeur (20) et/ou le récipient de vapeur peut ou peuvent être connectés au moins indirectement à au moins deux consommateurs de vapeur (V1, V2, V3, V4, V5, V6).

14. Machine de fabrication d'une bande de matériau, en particulier d'une bande fibreuse sous forme d'une bande de papier, de carton ou de papier-tissu, comprenant une section sèche et un système (1) de récupération de chaleur pour la section sèche (2), comprenant au moins un cylindre (TZ) chauffé à la vapeur avec un système de vapeur/condensat (4) associé à celui-ci et au moins un élément de séchage à haute température (3) pour solliciter au moins de manière indirecte la bande de matériau avec de l'air chaud avec un système d'air d'évacuation (5) associé à celui-ci, un échangeur de chaleur (W1) disposé dans le système d'air d'évacuation (5) ; au moins un étage de séparation de condensat monté en aval du cylindre de séchage dans le système de vapeur/condensat (4) et comprenant au moins un séparateur de condensat (S), dont la sortie (12) pour le condensat (K1) est accouplée au courant d'air d'évacuation (LA) par le biais de l'échangeur de chaleur (W1) au moins de manière indirecte par une technique thermique,
l'échangeur de chaleur (W1) étant réalisé et disposé de telle sorte qu'il soit approprié pour chauffer le condensat (K1, K2) guidé par celui-ci depuis l'au moins un étage de séparation de condensat monté en aval du cylindre de séchage (TZ) dans le système de vapeur/condensat (4) à des températures dans une plage de 150°C à 240°C, en particulier de 160°C à 220°C, de préférence de 179°C à 212°C, et
la sortie (9) pour le condensat chauffé hors de l'échangeur de chaleur (W1) étant accouplée au moins indirectement à une conduite de vapeur (20) et/ou à un récipient de vapeur avec interposition de moyens (21) pour détendre le condensat chauffé avec évaporation au moins partielle,
**caractérisée en ce que** la conduite de vapeur (20) et/ou le récipient de vapeur peut ou peuvent être connectés au moins indirectement à au moins deux consommateurs de vapeur (V1, V2, V3, V4, V5, V6).

15. Machine selon l'une quelconque des revendications 13 ou 14,
**caractérisée en ce**
**qu'**au moins un étage de séparation de condensat, de préférence une pluralité d'étages de séparation de condensat montés parallèlement ou en série les uns par rapport aux autres, comprenant au moins à chaque fois un séparateur de condensat (S1), sont montés en aval de la sortie (9) pour la vapeur (DW1) ou pour un mélange de vapeur et de condensat (DKW1) ou pour le condensat chauffé (K1') au niveau de l'échangeur de chaleur (W1), la sortie pour la vapeur (19) du ou des étages de séparation de condensat étant accouplée au moins indirectement à la conduite de vapeur (20).

16. Machine selon la revendication 15,
**caractérisée en ce**
**qu'**une sortie (18) pour le condensat (K2) d'au moins un étage de séparation de condensat monté en aval de l'échangeur de chaleur est accouplée à l'entrée (8) au niveau de l'échangeur de chaleur (W1).

17. Machine selon l'une quelconque des revendications 13 à 16,
**caractérisée en ce**
**qu'**une pluralité de consommateurs de vapeur (V1, V2, V3, V4, V5, V6) est prévue, lesquels sont ou peuvent être connectés à la conduite de vapeur (20) ou au récipient de vapeur.

18. Machine selon l'une quelconque des revendications 13 à 17,
**caractérisée en ce**
**qu'**une pluralité de consommateurs de vapeur (V1, V2, V3, V4, V5, V6) est prévue, lesquels sont ou peuvent être connectés individuellement et/ou par groupes à la conduite de vapeur (20) ou au récipient de vapeur, et des moyens (22.2, 22.3, 22.4, 22.5, 22.6) sont prévus pour l'accouplement/le désaccouplement sélectifs et/ou la commande des courants de vapeur et/ou des paramètres caractérisant la vapeur dans la connexion respective (23.2, 23.3, 23.4, 23.5, 23.6) entre le consommateur de vapeur (V1, V2, V3, V4, V5, V6) et la conduite de vapeur (20) ou le récipient de vapeur.

19. Machine selon l'une quelconque des revendications 13 à 18,
**caractérisée en ce que**
le cylindre de séchage (TZ) présente une alimentation en vapeur (16) et la conduite de vapeur (20) est connectée au moins indirectement à l'alimentation en vapeur du cylindre de séchage (T2) .

20. Machine selon la revendication 19,
**caractérisée en ce que**
l'alimentation en vapeur du cylindre de séchage (TZ) est accouplée à une conduite conduisant de la vapeur fraîche (13) et à la sortie (11) pour la vapeur (D1) hors de l'étage de séparation de condensat monté en aval du cylindre de séchage (TZ) et l'accouplement de la conduite de vapeur (20) à l'alimentation en vapeur est guidé par le biais de la conduite (13) conduisant de la vapeur fraîche (DF) ou par le biais d'une conduite conduisant un mélange de vapeur fraîche (DF) et de vapeur (D1) provenant du séparateur de condensat.

21. Machine selon l'une quelconque des revendications 13 à 20,
**caractérisée en ce**
**qu'**avant l'entrée (8) pour le condensat (K1, K2) au niveau de l'échangeur de chaleur (W1) et/ou entre la sortie (9) pour la vapeur (DW1) ou un mélange de vapeur et de condensat (DKW1) au niveau de l'échangeur de chaleur (W1) et un séparateur de condensat (S1) et/ou un consommateur de vapeur (V, V1, V2, V3, V4, V5, V6) sont disposés des moyens/dispositifs (21) pour influencer les courants de vapeur, en particulier des moyens/dispositifs pour commander la pression et/ou réguler la pression.
